# EUROPEAN PATENT APPLICATION

(11) **EP 1 255 407 A2**
(43) Date of publication of application: **06.11.2002**
(21) Application number: 02009770.5
(22) Date of filing: 30.04.2002
(51) Int. Cl.: H04N 7/24

(54) **Storage data broadcast system for determining whether reception has been correctly made**

(30) Priority: 01.05.2001 JP 2001134159
(71) Applicant: MATSUSHITA ELECTRIC INDUSTRIAL CO., LTD., Kadoma-shi, Osaka 571-8501 (JP)
(72) Inventor: Arai, Yuko, Tokyo 144-0034 (JP); Kawaguchi, Toru, Tokyo 156-0057 (JP); Ishikawa, Akira, Kashiba-shi, Nara 639-0234 (JP); Nakaoka, Hideaki, Toyonaka-shi, Osaka 560-0085 (JP)
(74) Representative: Grünecker, Kinkeldey, Stockmair & Schwanhäusser Anwaltssozietät

(57) **Abstract**

A receiving apparatus conducting reception and storage on a program basis is designed so as to be able to determine whether contents transmitted within a program time frame have been correctly stored. To achieve this, a contents information adding part adds flags indicating first and last contents within a program time frame, and data event IDs for identifying time frames (contents frames) for transmitting contents while incrementing them one at a time. A receive success/failure evaluating part of the receiving apparatus checks the flags indicating first and last contents and the increment status of the data event IDs to determine whether reception has been correctly made.

## Description

### BACKGROUND OF THE INVENTION

### Field of the Invention

The present invention relates to a method by which a transmitting apparatus creates information for a receiving apparatus to determine whether all contents transmitted within a duration in which a program is transmitted (hereinafter, a program transmitting duration) have been received or stored, and a method by which the receiving apparatus determines whether the reception or storage has been correctly conducted.

### Description of the Prior Art

In conventional storage data broadcast, program information indicating start and end times of each program is transmitted according to a format (SI) defined in, e.g., ARIB STD-B10. On the other hand, contents are repeatedly transmitted within a given time by the data carousel method. Although IDs and versions (contents IDs, contents versions) of contents transmitted within a program transmitting duration in a receiving apparatus can be included in program information, such information cannot be provided to contents entities.

Since the relations between programs and contents cannot be specified for transmission with conventional technologies, if reception and storage are attempted on a program basis (contents are received and stored for time represented by a program start time and duration (or time length) of program information), it cannot be detected that contents have not been transmitted on schedule, so that contents to be transmitted in different programs may be wrongly stored. Also, it cannot be determined from only program information that contents have been correctly received, so that it may not be recognized that part of contents has been unsuccessfully received or stored.

### SUMMARY OF THE INVENTION

According to a first means for solving the above problems, a transmitting apparatus comprises: a program organization information storing part for storing program organization information including at least broadcast start time and duration for each program; a contents organization information storing part for storing contents organization information including contents frames each composed of at least broadcast start time and duration for each contents; a program contents-related information creating part for creating program contents-related information including information about contents frames transmitted within a program transmitting duration for each program from the program organization information and the contents organization information; a program information creating part for creating program information including contents-related information; a contents storing part for storing contents; a contents information adding part for adding contents information to the contents; a program information storing part for storing program information; and a transmitting part for transmitting contents information, contents, and program information. A receiving apparatus comprises: a contents referencing part for presenting contents in response to a contents reference request from the outside; a program storage success/failure evaluating part for determining whether contents have been received or stored correctly; a program contents-related information storing part for storing program contents-related information; a contents storing part for storing contents; a program information storing part for storing program information; and a receiving part for receiving program information, program contents-related information, contents, and contents information.

According to a second means, a transmitting apparatus comprises: a program organization information storing part for storing program organization information including at least broadcast start time and duration for each program; a contents organization information storing part for storing contents organization information including contents frames each composed of at least broadcast start time and duration for each contents; a program contents-related information creating part for creating program contents-related information including information about contents frames transmitted within a program transmitting duration for each program from the program organization information and the contents organization information; a contents storing part for storing contents; a contents information adding part for adding contents information to the contents; a program information storing part for storing program information; and a transmitting part for transmitting contents information, contents, and program information. A receiving apparatus comprises: a contents referencing part for presenting contents in response to a contents reference request from the outside; a program storage success/failure evaluating part for determining whether contents have been received or stored correctly; a contents storing part for storing contents; a program information storing part for storing program information; and a receiving part for receiving program information, program contents-related information, contents, and contents information.

As apparent from the above description, the transmitting apparatus transmits program information added with contents-related information and contents added with contents information, and the program storage success/failure evaluating part of the receiving apparatus matches a list of pieces of contents information added to contents successfully stored with contents-related information added to the program information, and can thereby correctly determine whether contents transmitted within a program transmitting duration have been successfully stored. Thereby, when unsuccessful storage is found, if a program transmitting contents of the same information can be identified by the program information, reception and storage processing can be performed again, so that contents unsuccessfully stored can be restored.

The transmitting apparatus includes identifiers added to programs whose contents are to be transmitted, in contents information, and transmits the contents information along with the contents, whereby, even in the case where contents have not been transmitted on schedule, it can be determined whether the contents are contents to be stored in the receiving apparatus, so that incorrect contents not to be stored can be prevented from being stored.

The transmitting apparatus includes transmission sequences of data events within a program transmitting duration and the number of data events transmitted within the same program transmitting duration in contents information and transmits the contents information along with contents, whereby the receiving apparatus can determine whether each of contents transmitted within the program transmitting duration has been correctly received or stored. The same effect is also obtained by describing flags for identifying the first and last data events to be transmitted within a program transmitting duration, and data event IDs added according to the rule of adding consecutive values as contents information.

Therefore, it is an object of the invention to provide a storage data broadcast system, and a transmitting apparatus and a receiving apparatus therefor, in which it is correctly determined whether the contents transmitted within a program transmitting duration has been successfully stored or not, and if it is found that the storage of the contents has been unsuccessful, the reception and storage processing of the same contents can be performed again.

The above described objects and advantages of the present invention will be made more apparent by the following embodiments described with reference to the accompanying drawings.

### BRIEF DESCRIPTION OF THE DRAWINGS

FIG. 1 is a block diagram showing the configurations of a transmitting apparatus and a receiving apparatus in a first embodiment of the present invention;
FIG. 2 is a diagram showing program organization information stored in a program organization information storing part in the first embodiment;
FIG. 3 is a diagram showing contents organization information in the first embodiment;
FIG. 4 is a diagram showing program contents-related information in the first embodiment;
FIG. 5 is a diagram showing program information in the first embodiment;
FIG. 6 is a diagram showing program information in the first embodiment;
FIG. 7 is a diagram showing a transmission image from a transmitting part in the first embodiment;
FIG. 8 is a diagram showing a transmission image from the transmitting part in the first embodiment;
FIG. 9 is a diagram showing a transmission image from the transmitting part in the first embodiment;
FIG. 10 is a diagram showing a transmission image from the transmitting part in the first embodiment;
FIG. 11 is a diagram showing a transmission image from the transmitting part in the first embodiment;
FIG. 12 is a diagram showing contents organization information in the first embodiment;
FIG. 13 is a flowchart for explaining data transmission operation of the transmitting apparatus in the first embodiment; FIG. 14 is a diagram showing contents management information in the first embodiment;
FIG. 15 is a diagram showing storage contents management information in the first embodiment;
FIG. 16 is a flowchart for explaining data receive operation of the receiving apparatus in the first embodiment;
FIG. 17 is a block diagram showing the configurations of a transmitting apparatus and a receiving apparatus in a second embodiment of the present invention;
FIG. 18 is a diagram showing program contents-related information in the second embodiment;
FIG. 19 is a flowchart for explaining data transmission operation of the transmitting apparatus in the second embodiment;
FIG. 20 is a flowchart for explaining data receive operation of the receiving apparatus in the second embodiment;
FIG. 21 is a flowchart for explaining data receive operation of a receiving apparatus in a third embodiment;
FIG. 22 is a diagram showing a transmission image from the transmitting part in the second embodiment;
FIG. 23 is a diagram showing storage contents management information in the second embodiment;
FIG. 24 is a diagram showing storage contents management information in which missing data events exist, in the second embodiment;
FIG. 25 is a flowchart for explaining data receive operation, different from that shown in FIG. 20, of the receiving apparatus in the second embodiment;
FIG. 26 is a diagram showing storage contents management information in the second embodiment of the present invention; and
FIG. 27 is a diagram showing storage contents management information in the first embodiment of the present invention.

### DETAILED DESCRIPTION OF THE PREFERRED EMBODIMENTS

### (First embodiment)

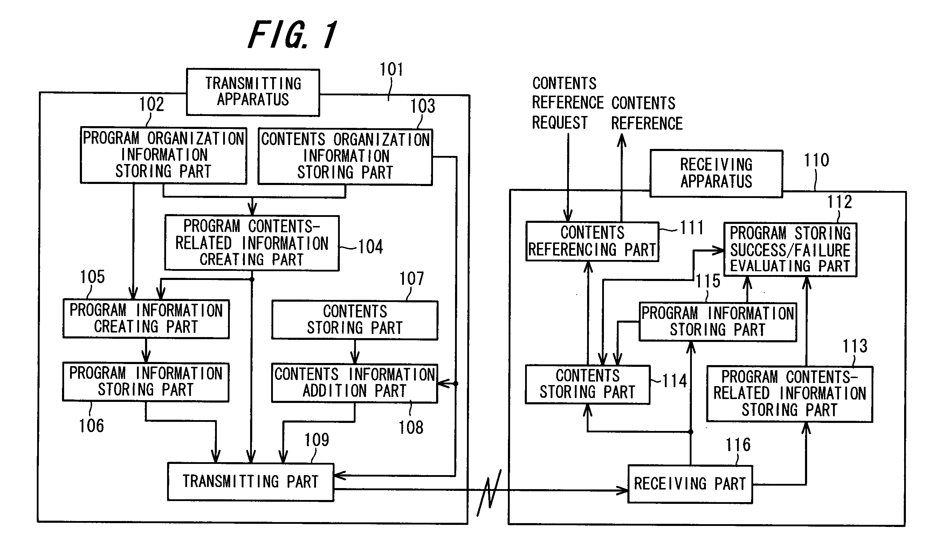

Hereinafter, embodiments of the present invention will be described with reference to the accompanying drawings. FIG. 1 is a block diagram showing the configurations of a transmitting apparatus and a receiving apparatus in a first embodiment of the present invention. In FIG. 1, 101 designates a transmitting apparatus for transmitting broadcast contents in a storage data broadcasting system of the present invention. The transmitting apparatus comprises: a program organization information storing part 102 for storing program organization information; a contents organization information storing part 103 for storing contents organization information; a program contents-related information creating part 104 for creating program contents-related information from the program organization information and the contents organization information; a program information creating part 105 for creating program information including contents-related information from the program contents-related information; a program information storing part 106 for storing the program information created in the program information creating part 105; a contents storing part 107 for storing contents; a contents information adding part 108 for adding contents information to the contents; and a transmitting part 109 for transmitting the program information, program contents-related information, contents, and contents information.

A receiving apparatus 110 comprises: a contents referencing part 111 for presenting contents in response to a contents reference request from the outside; a program storage success/failure evaluating part 112 for determining whether contents have been received or stored correctly; a program contents-related information storing part 113 for storing program contents-related information; a contents storing part 114 for storing contents; a program information storing part 115 for storing program information; and a receiving part 116 for receiving program information, program contents-related information, contents, and contents information.

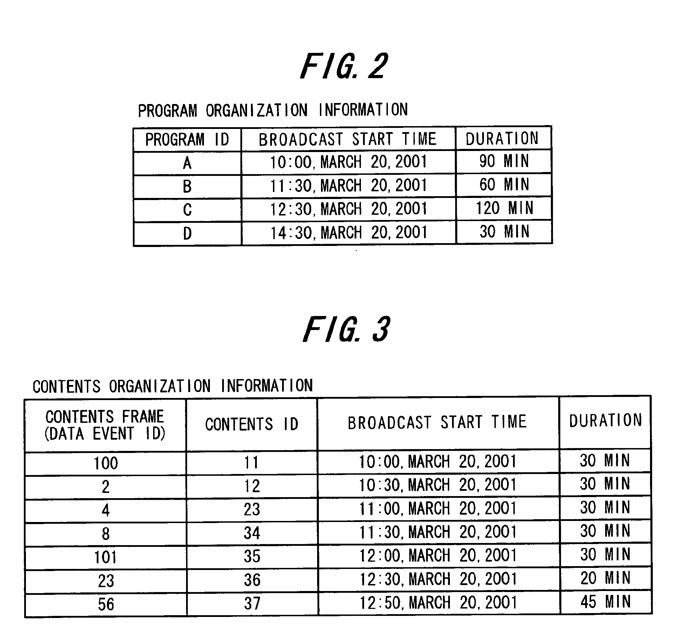

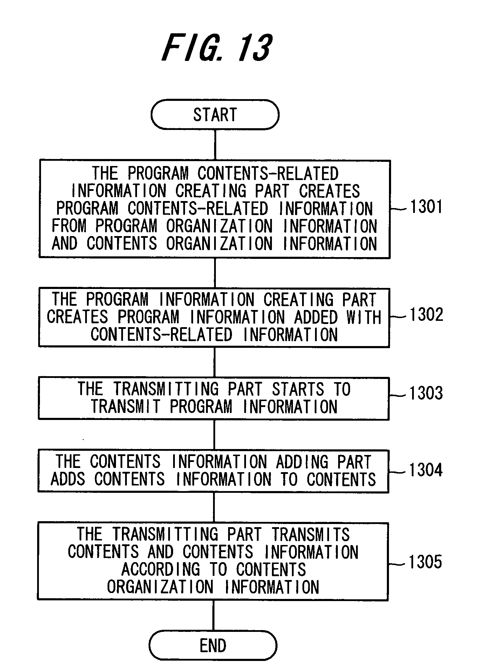

In the transmitting apparatus and the receiving apparatus that are thus configured, first, data transmission operation of the transmitting apparatus 101 is described with reference to FIG. 13. FIG. 13 is a flowchart for explaining data transmission operation of the transmitting apparatus in this embodiment. The program organization information storing part 102 stores program organization information as shown in FIG. 2. The program organization information consists of, for example, program IDs assigned for each program, program broadcast dates, and program duration (or time length); in FIG. 2, a program having a program ID of A will be broadcast from 10:00, March 20, 2001 with a duration of 90 minutes. Other programs are also presented with broadcast start date and duration. The contents organization information storing part 103 stores contents organization information as shown in the drawing. The contents organization information consists of, for example, data event IDs for identifying contents frames (hereinafter referred to as data events), which are time frames for transmitting contents, contents IDs for identifying contents transmitted in the data events, data event broadcast dates, and duration. In the contents organization information shown in FIG. 3, information that contents ID transmitted in a time frame of a contents frame having a data event ID of 100 is 11, that the data event will be broadcast from 10:00, March 20, 2001, and that the duration (or time length) of the broadcast is 30 minutes are identified. Other data events are also identified in the same way, presented with a data event ID, contents ID of contents to be transmitted, broadcast start date, and duration.

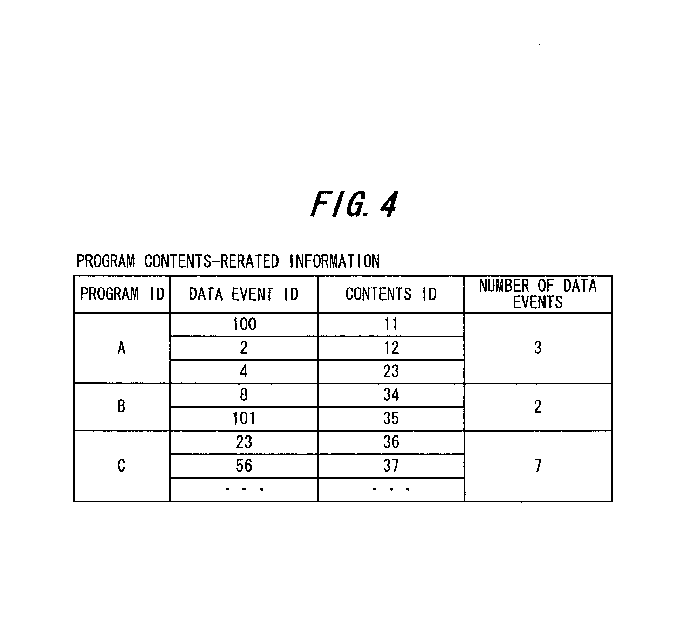

From program organization information and contents organization information as shown in FIGS. 2 and 3, respectively, the program contents-related information creating part creates program contents-related information describing information about data events within a program time frame for each program. Specifically, data events transmitted within a program transmitting duration of each program in the program organization information are retrieved from the contents organization information to create a list. For example, in FIG. 2, it is understood that transmitting duration of a program having a program ID of A is from 10:00 to 11:30, March 20, 2001 from its broadcast start date and duration. Data events transmitted within the time are retrieved from the contents organization information of FIG. 3; it is understood that three data events whose data event IDs are 100, 2, and 4 (corresponding contents IDs are 11, 12, and 23) are retrieved. Consequently, data event ID, contents ID, and data event count for a program ID of A of program contents-related information in FIG. 4 are described as (100, 2, 4), (11, 12, 23), and 3, respectively. The same processing is also performed for other programs and program contents-related information as shown in FIG. 4 is completed (step 1301).

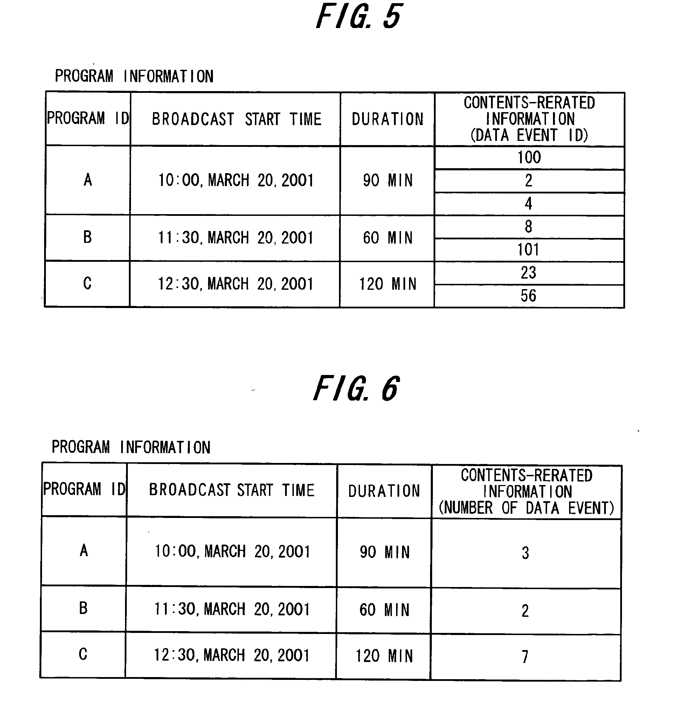

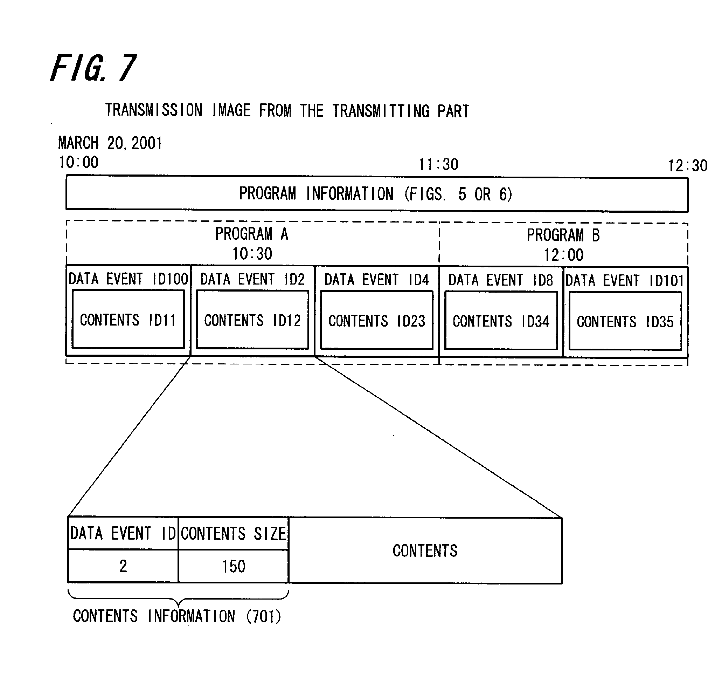

Next, the program information creating part creates program information added with contents-related information from the program organization information and the program contents-related information. For example, in the case where program information is created from the program organization information as shown in FIG. 2 and the program contents-related information of FIG. 4, for each of programs included in the program organization information of FIG. 2, a list of data event IDs and a data event count which are included in the. program contents-related information are additionally described as contents-related information. Program contents-related information to which a description of a list of data event IDs is added as contents-related information is as shown in FIG. 5, and program contents-related information to which a description of data event count is added is as shown in FIG. 6. In this way, program information is completed (step 1302), and the completed program information is stored in the program information storing part 106.

Program information, though described later, is used to decide time when the receiving apparatus 110 receives and stores a program, and is passed to the receiving apparatus 110 after taking preparations for reception and storage into account. The program information is repeatedly transmitted before the program is broadcast because it is not known whether power to the receiving apparatus 110 is on (step 1303).

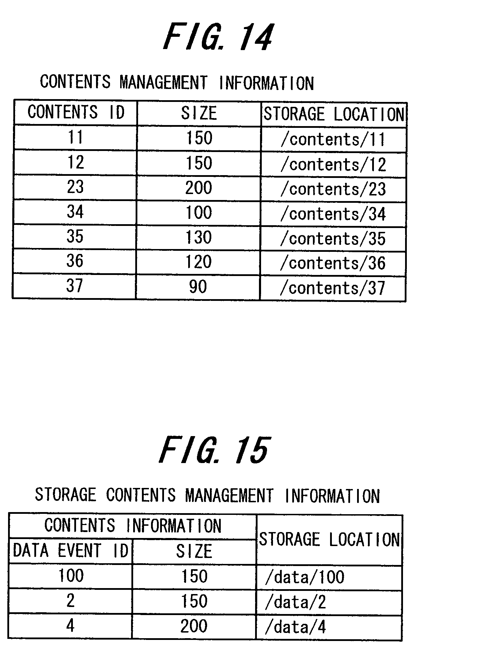

Next, the contents information adding part 108 passes contents stored in the contents storing part 107 to the transmitting part 109 after adding contents information to it. The contents storing part 107 manages and stores contents by contents management information as shown in FIG. 14. The contents management information consists of, for example, contents size and a storage location within the contents storage part 107 for each contents ID. The contents information adding part 108 receives, e.g., contents organization information as shown in FIG. 3 from the contents organization information storing part 103 and adds a data event ID, as contents information, to contents indicated by a contents ID corresponding to a data event ID. In FIG. 3, since a data event ID corresponding to contents whose contents ID is 12 is 2, a data event ID 2 is added as contents information. Thereby, contents information 701 as shown in FIG. 7 is obtained (step 1304). Contents size is obtained from a value managed by the contents storing part 107 and may not be set if not required for reception and storage in the receiving apparatus.

The transmitting part 109 transmits contents along with contents information by duration when a broadcast start date included in the contents organization information is reached. A transmission image from the transmitting part is as shown in FIG. 7. Program information shown in FIGS. 5 or 6 is transmitted not only during program transmission time but also repeatedly in advance as well as within a program transmitting duration. In a period from 10:00 to 10:30, contents of contents ID 11 is transmitted with contents information added within the data event of data event ID 100. As contents information, like the contents of contents ID 12, a data event ID and contents size are described (contents ID is described in the drawing for the purpose of explanation but is not included in contents information). In the same way, other contents are also transmitted by the transmitting part 109 according to the contents organization information (step 1305). For the transmission, for example, the data carousel method defined in ARIB STD-B24 may be used to repeat transmission within data event time.

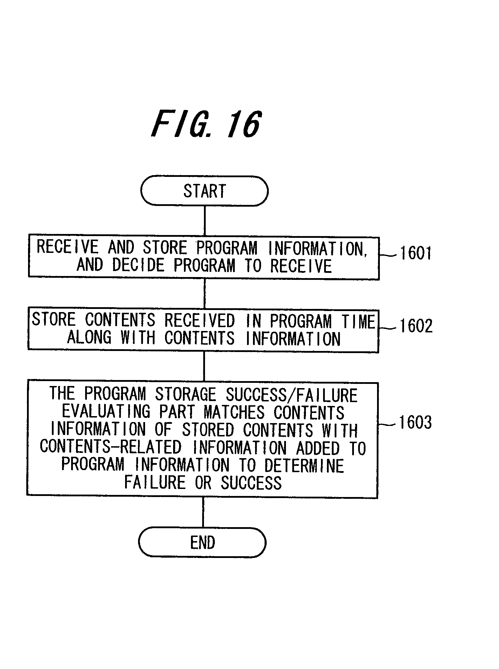

In this way, program information, contents information, and contents transmitted by the transmitting apparatus 101 are received by the receiving apparatus 110. FIG. 16 is a flowchart for explaining data receive operation of the receiving apparatus 110 in this embodiment.

When data receive operation is started in the receiving apparatus 110, the receiving part 116 receives program information as shown in FIG. 5 and stores it in the program information storing part 115. Programs that satisfy a storage condition (e.g., program ID of A or D) set in advance in the receiving apparatus 110 or are selected by the viewer from a program information display part not shown are decided as programs to be received and stored (step 1601). Herein, the following description assumes that a program having a program ID of A has been selected.

The program information storing part 115 directs the contents storing part 114 to receive and store a program that a received and stored program ID is A, along with a broadcast start date and duration. The contents storing part 114 stores the received contents by a specified duration from a specified broadcast date (step 1602). Since the program information of FIG. 5 indicates that a program having a program ID of A is specified as 10:00 to 11:30 of March 20, 2001, the contents storing part 114 stores the received contents within the time. Since contents are transmitted as shown in FIG. 7 within the time, if the contents are normally received and stored, the contents storing part 114 receives data events of data event IDs 100, 2, and 4, and stores contents having been transmitted within the data events. The contents storing part 114, for each normal termination of reception and storage of one contents, stores the contents and contents information, and manages them by storage contents management information as shown in FIG. 15. Contents information (data event ID, size) is described in order from received contents information. A storage location is a location in which received contents are stored, and may differ depending on the receiving apparatus 110. For a contents reference request from the outside of the receiving apparatus 110 by the viewer or the like to the contents referencing part 111, the contents referencing part 111 issues a request for the contents to the contents storing part 114, which obtains a contents storage location from the storage contents management information and passes the contents stored in the storage location to the contents referencing part 111.

At the termination of the program, the program information storing part 115 passes contents-related information added to the program information to the program storage success/failure evaluating part 112 to request evaluation of whether the reception succeeded or failed. For example, at the termination of the program having a program ID of A, in the case where the program information storing part 115 stores program information as shown in FIG. 5, it passes a list of data event IDs (100, 2, 4) as contents-related information to the program storage success/failure evaluating part 112 to request evaluation of whether the program was stored successively or not. Upon receipt of the request, the program storage success/failure evaluating part 112 refers to storage contents management information (FIG. 15) managed by the contents storing part 114 for matching with the contents-related information (step 1603). In this example, data event IDs included in the storage contents management information (FIG. 15) are 100, 2, and 4, which match the contents-related information. Therefore, it is concluded that the reception is successful.

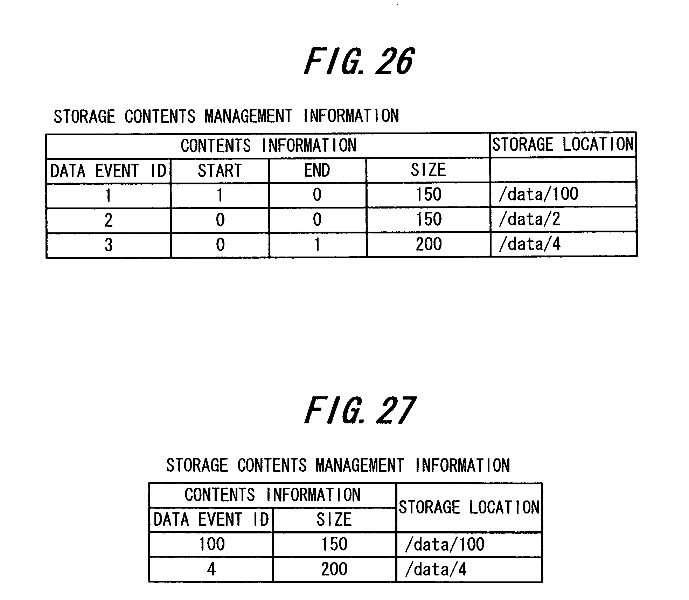

If there are contents unsuccessfully received or stored, the storage contents management information is lacking in part or all of data event IDs. Storage contents management information shown in FIG. 27 is lacking in information corresponding to a data event of data event ID 2 because the data event of data event ID 2 was unsuccessfully received and contents transmitted within the time was unsuccessfully stored (or reception succeeded but storage processing failed). The program storage success/failure evaluating part 112 recognizes the existence of data events failing in reception or storage by matching with the contents-related information.

Although the above description has been made of success/failure evaluation made at the time of program termination, success/failure evaluation can also be made in parallel with program reception. In this case, the program information storing part 115 passes contents-related information to the program storage success/failure evaluating part 112 at the start of program. For each success in contents reception and storage, the contents storing part 114 passes a data event ID and success notification to the program storage success/failure evaluating part 112. When the same (100, 2, 4) as in the previous example had been passed to the program storage success/failure evaluating part 112 as contents-related information, if data event IDs (100, 2, 4) were passed to the program storage success/failure evaluating part 112 from the contents storing part 114, it is recognized that all data events within the program time frame were correctly received and successfully stored. However, if at least one of the data events is missing, it can be recognized that data events unsuccessfully received or stored exist. Although, in the above description, contents are transmitted one at a time in time sequence, they may be transmitted in parallel (multiple contents at the same time).

In the case where an arrangement is made so that data events are transmitted in the order of data event IDs included in contents-related information added to program information (in this case, the data events are transmitted one at a time in time sequence instead of in parallel) , when the data event IDs were not passed in order, the program storage success/failure evaluating part 112 can recognize failure in reception or storage.

Although, in this embodiment, a description has been made of a method of adding contents-related information to program information from program contents-related information for transmission, without adding the contents-related information to the program information, information indicating a relation between programs and contents can be transmitted separately as program contents-related information. In this case, the receiving apparatus 110 stores the program contents-related information in the program contents-related information storing part 113, which passes the program contents-related information to the program storage success/failure evaluating part 112. The program storage success/failure evaluating part 112 extracts contents-related information for each program by using program IDs as key. Subsequent operations are the same as those of the receiving apparatus 110 described above.

As described above, the transmitting apparatus 101 transmits program information added with contents-related information and contents added with contents information, while the program storage success/failure evaluating part 112 of the receiving apparatus 110 matches a list of pieces of contents information added to contents successfully stored with the contents-related information added to the program information, and can thereby correctly determine whether contents transmitted within a program transmitting duration have been successfully stored. Thereby, when unsuccessful storage is found, if a program transmitting contents of the same information can be identified by the program information, reception and storage processing can be performed again, so that contents unsuccessfully stored can be restored.

### (Second embodiment)

In a second embodiment, the contents organization information storing part 103 does not manage data event IDs and the contents information adding part 108 adds a data event ID immediately before transmitting contents.

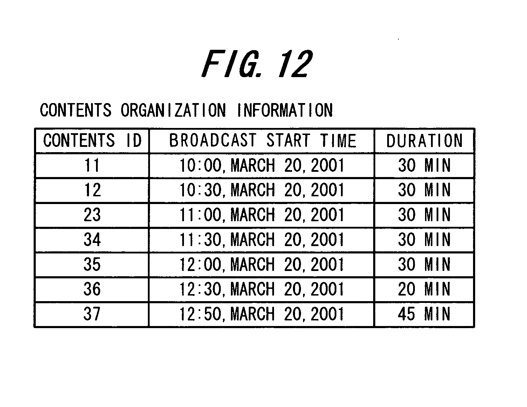

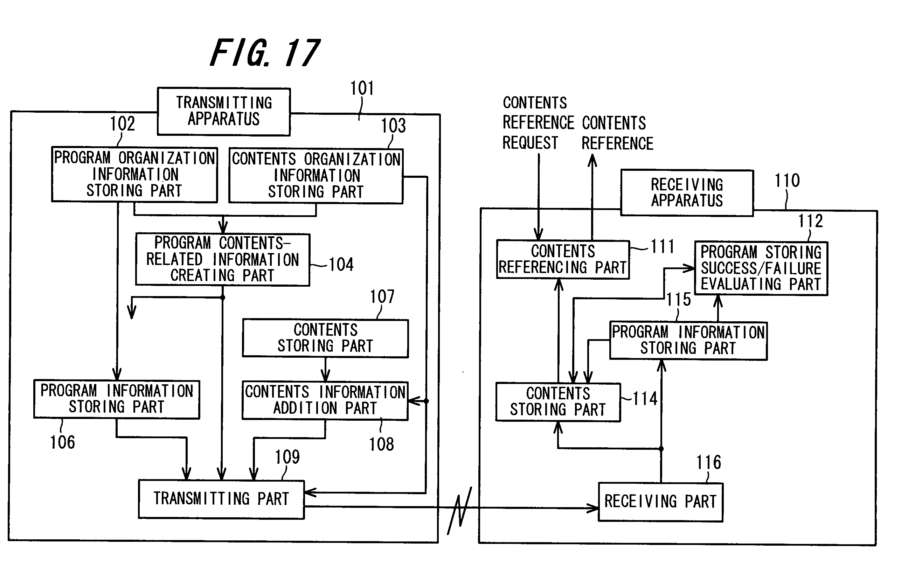

FIG. 17 shows the configurations of a transmitting apparatus and a receiving apparatus in this embodiment. This embodiment is different from the first embodiment in that the program information creating part 105 does not exist and program organization information managed by the program organization information storing part 102 is passed to the program information storing part 106 without being added with contents-related information. Also, this embodiment is different from the first embodiment in that data event IDs as shown in FIG. 12 are not included in contents organization information managed by the contents organization information storing part 103. Also, there is no direct information flow from the contents organization information storing part 103 to the contents information adding part 108 and there is an information flow from the program contents-related information creating part 104 to the contents information adding part 108. The configuration of the receiving apparatus 110 is the same as that in FIG. 1, except that a program contents-related information storing part does not exist.

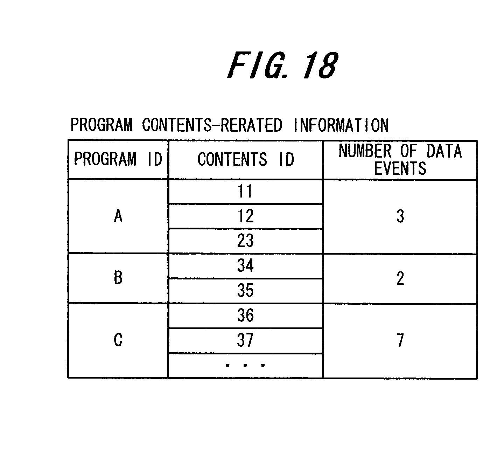

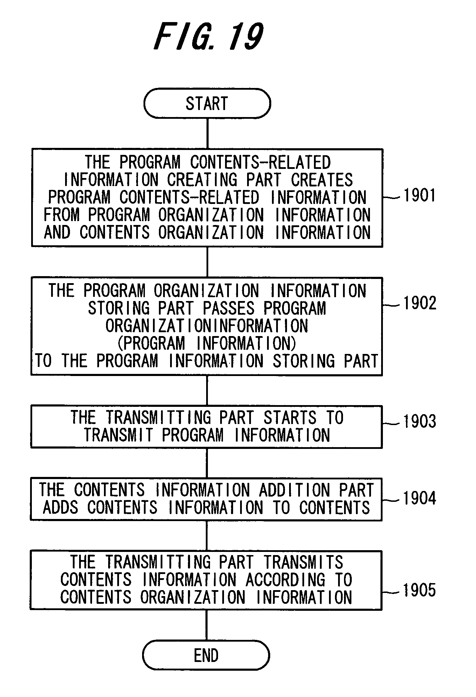

Hereinafter, the operation of the transmitting apparatus 101 in the second embodiment will be described with reference to FIG. 19. FIG. 19 is a flowchart for explaining data transmission operation of the transmitting apparatus in this embodiment. Program organization information managed by the program organization information storing part 102 is as shown in FIG. 2, as in the first embodiment. Contents organization information managed by the contents organization information storing part 103, as described previously, does not include data event IDs, as shown in FIG. 12. Therefore, program contents-related information created by the program contents-related information creating part 104 also contains no data event IDs, as shown in FIG. 18 (step 1901). Since the program information creating part 105 does not exist, program organization information (FIG. 2) stored by the program organization information storing part 102 is stored directly in the program information storing part 106 as program information (step 1902), and the transmitting part 109 starts to transmit program information (step 1903).

Next, the contents information adding part 108 adds contents information to contents stored by the contents storing part 107 (step 1904), and the transmitting part 109 transmits the contents and contents information (step 1905). Although a processing flow in steps 1904 and 1905 is the same as that in the first embodiment, the contents of contents information added are different from those in the first embodiment.

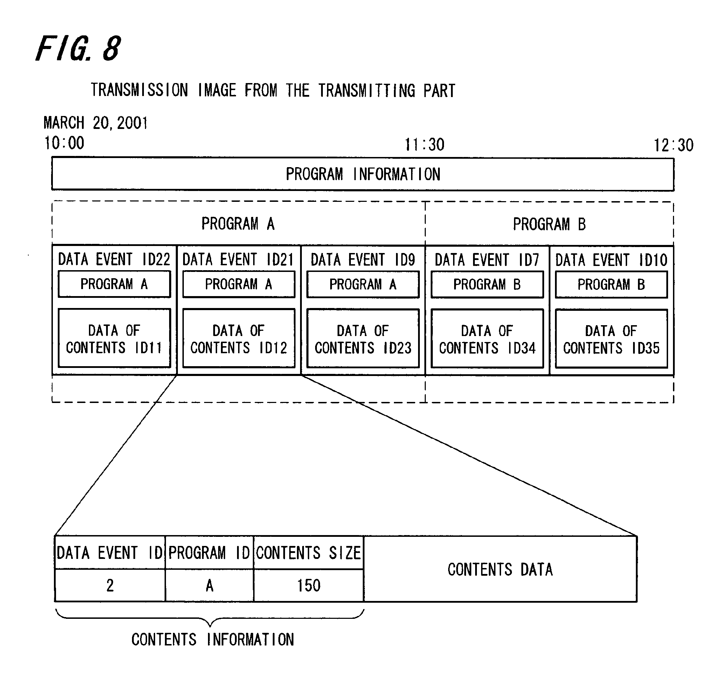

A description will be made of the case where the contents of contents information are program IDs. The contents information adding part 108 receives program contents-related information as shown in FIG. 18 from the program contents-related information creating part 104 and obtains the program IDs of programs to which broadcast time belongs, for each contents. For example, since it is determined from the program contents-related information of FIG. 18 that contents IDs 11, 12, and 23 belong to a program having a program ID of A, contents information of each contents, with a program ID added, is passed to the transmitting part 109. In this case, a transmission image from the transmitting part 109 is as shown in FIG. 8. Since data event IDs are not included in the program contents-related information, the contents information adding part 108 adds them according to proper rules. Possible examples of proper adding rules are adding consecutive values, not adding same values to adjacent data events, and the like; in this example, any rule is permitted. Although only contents information for data of contents ID 12 is shown in FIG. 8, data of other contents is also added with contents information in the same way and is transmitted from the transmitting part 109.

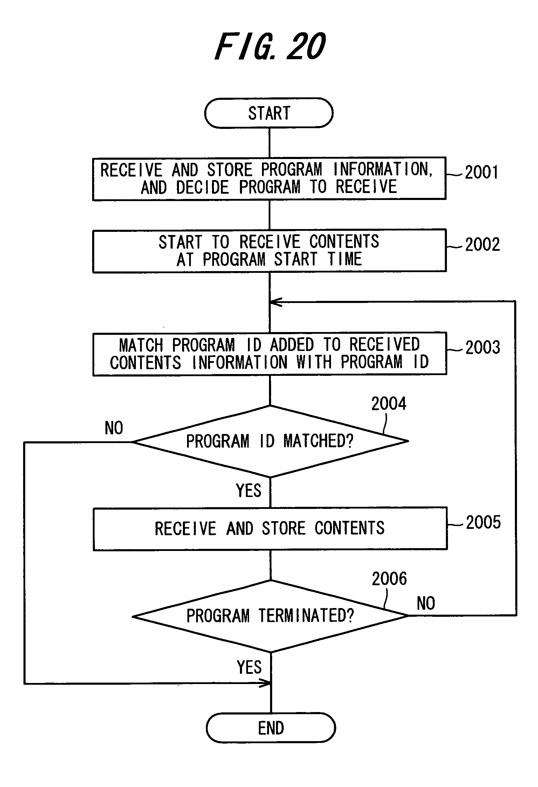

The operation of the receiving apparatus 110 when receiving such contents information and contents will be described according to FIG. 20. FIG. 20 is a flowchart for explaining data receive operation of the receiving apparatus in this embodiment. The receiving part 116 receives program information and stores it in the program information storing part 115. It decides programs to be received (step 2001). The flow of processing up to this point is the same as the operation of the receiving apparatus 110 in the first embodiment. The following description assumes that program having a program ID of A is selected.

The program information storing part 115 passes program information on a program having a program ID of A to the program storage success/failure evaluating part 112, which directs the contents storing part 114 to receive and store contents information and contents within a program time frame of the program having a program ID of A along with broadcast start dates and duration. The contents storing part 114 starts to store the contents information and contents received by the receiving part 116 when broadcast date is reached (step 2002).

In this example (transmission image as shown in FIG. 8), the contents storing part 114 first stores contents information about contents ID 11 from 10:00, March 20, 2001, and passes the contents information to the program storage success/failure evaluating part 112. The program storage success/failure evaluating part 112 matches a program ID included in the contents information received from the contents storing part 114 with a program ID included in the program information received from the program information storing part 115 (step 2003). Since A is described as a program ID in both the content information received from the contents storing part 114 and the program information received from the program information storing part 115, the program storage success/failure evaluating part 112 judges that the contents information is correct, and returns OK to the contents storing part 114 (step 2004). Upon receiving OK, the contents storing part 114 stores contents following the contents information (step 2005). In this way, within the program time frame of the program ID of A, contents whose contents IDs are 11, 12, and 23 are stored in the contents storing part 114 (step 2006).

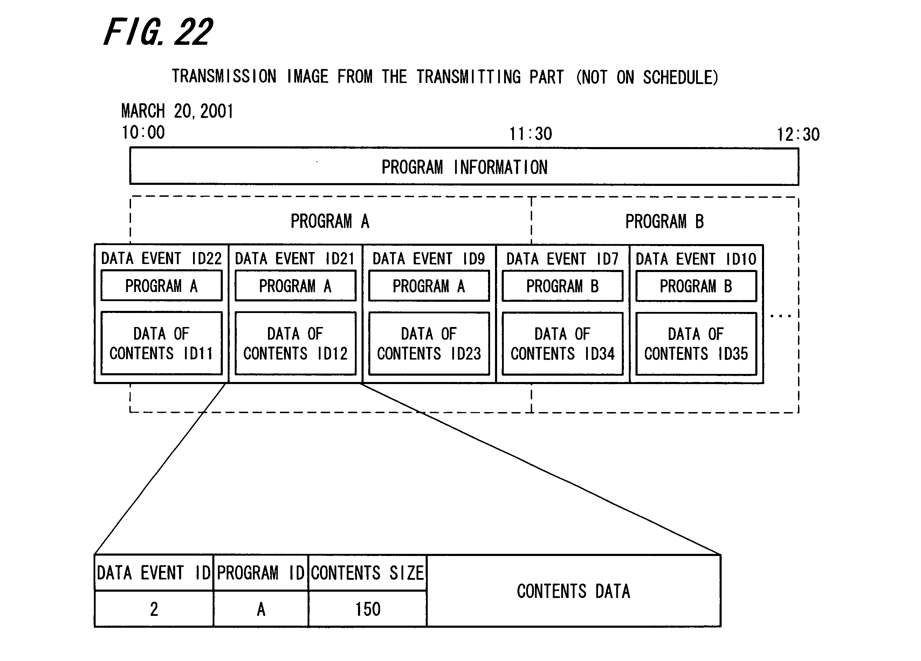

The contents information and contents are correctly stored in this way in the case where they are transmitted according to a schedule specified in the contents organization information. The following description is on a method of the receiving apparatus 110 detecting that contents information and contents were not correctly transmitted on schedule from the transmitting part for some reason. For example, as shown in FIG. 22, if individual contents were transmitted from the transmitting part 109 earlier than schedule of the contents organization information, the contents storing part 114 would also store contents (data event ID 7) of contents ID 34. However, by checking program IDs of the contents information, the program storage success/failure evaluating part 112 recognizes that contents of contents ID 34 should be actually transmitted as a program of program ID B, and returns NG to the contents storing part 114 (flow of NO of step 2004). Upon receiving NG, the contents storing part 114 discards the stored contents information and does not store contents. Although an example of transmission ahead of schedule is shown herein, transmission behind schedule can also be recognized by the program storage success/failure evaluating part 112.

As has been described above, the transmitting apparatus 101 sets identifiers added to programs whose contents are to be transmitted in contents information and transmits it along with contents, whereby, even if contents were not transmitted on schedule, whether the contents should be stored can be determined by the receiving apparatus 110 such that incorrect contents that should not be stored can be prevented from being stored. Although the above description deals with matching of program IDs in parallel with reception, all contents and contents information received within a program receiving duration are stored and, at termination of the program, contents information including program IDs different from a program ID included in program information, and contents associated with the contents information may be discarded.

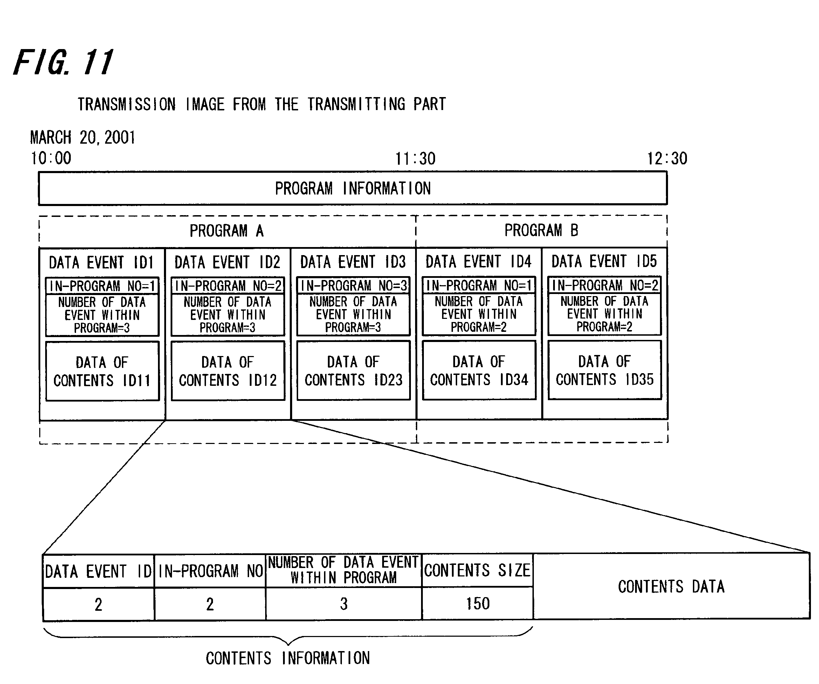

The following description is on the case where the contents of contents information is the order in which data events within a program time frame are transmitted and the number of data events transmitted within the same program time frame. Although the flow of processing in the transmitting apparatus 101 is the same as the case where the contents of the above described contents information are program IDs, since contents information adding part 108 adds, as contents information, the order in which data events within a program time frame are transmitted and the number of data events transmitted within the same program time frame, a transmission image from the transmitting part is as shown in FIG. 11. As contents information, the order in which data events within a program time frame are transmitted and the number of data events (the number of data events within a program) transmitted within the same program time frame are described.

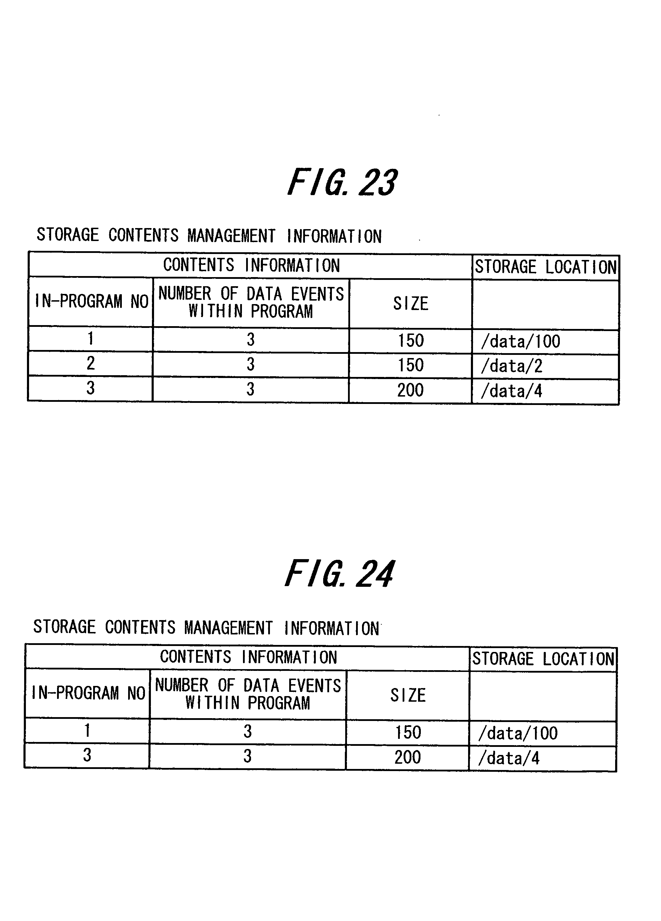

Upon receiving the transmission image as shown in FIG. 11, according to the same flow as the flowchart shown in FIG. 16, the contents storing part 114 stores contents information and contents received within a program receiving duration (contents-related information is not required in success/failure evaluation processing in step 1603, and success or failure is determined from only contents information). At program termination, the program storage success/failure evaluating part 112 refers to storage contents management information held by the contents storing part 114 to judge whether all contents within a program time frame have been stored. FIGS. 23 and 24 show configurations of the above described storage contents management information. For example, when a program having a program ID of A is received and stored, if storage contents management information held by the contents storing part 114 at program termination is as shown in FIG. 23, it can be determined that all contents transmitted in three data events within program have been correctly stored. If missing data events exist in the storage contents management information as shown in FIG. 24, data events unsuccessfully received or stored can be located. It is determined from FIG. 24 that second data events were unsuccessfully received or stored.

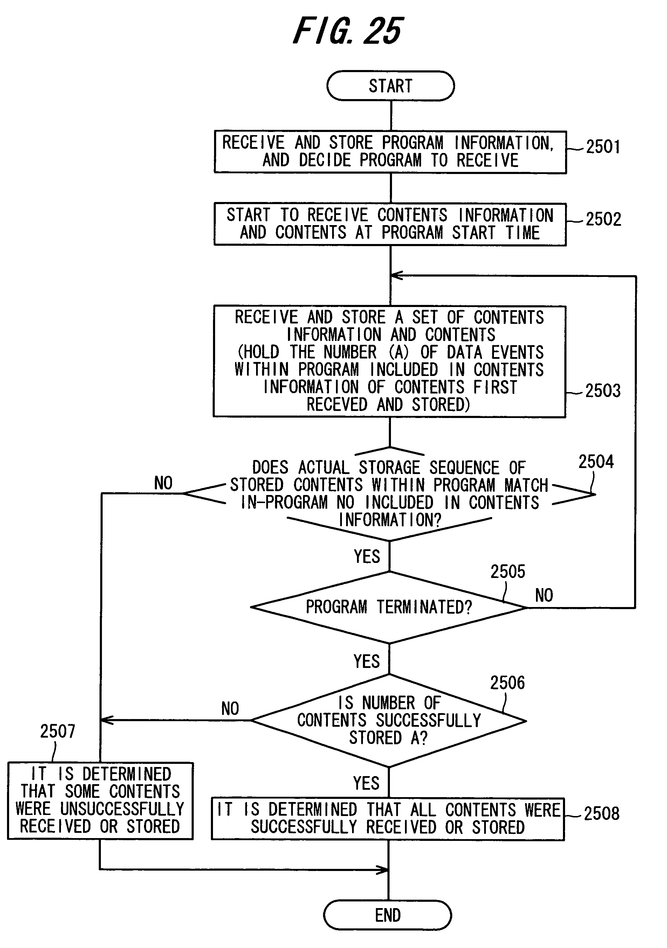

Instead of making success/failure evaluation at program termination, success/failure evaluation can be made in parallel with reception and storage within a program time frame. A processing flow in that case is as shown in FIG. 25. Processing up to steps 2501 and 2502 is the same as the receiver apparatus operation described previously. The receiving apparatus 110 receives and stores contents information and contents in pairs. In other words, only contents or contents information is not received or stored singly. For example, contents information is first received and then corresponding contents are received. If contents information is unsuccessfully received, reception of the contents information is tried until the reception succeeds.

The program storage success/failure evaluating part 112 holds the number of data events within program described in contents information of first contents received (step 2503). In this case, since a transmission image from the transmitting part 109 is as shown in FIG. 11, 3, which is the total number of data events within program, is held in the program storage success/failure evaluating part 112. The contents storing part 114 successively stores contents information and contents received within a program receiving duration, and for each storage, notifies the program storage success/failure evaluating part 112 of the fact. The program storage success/failure evaluating part 112 judges or determines the sequence of stored contents within a program time and judges whether it matches an in-program number included in the contents information (step 2504). If it matches, the program storage success/failure evaluating part 112 determines that reception and storage up to the point have been performed, and otherwise determines that contents unsuccessfully received or stored exist (step 2507). If program end time is not reached (step 2505), the next contents information and contents are received and stored. If program end time is reached, processing to store contents information and contents is discontinued, the number of data events within program held in step 2503 and the number of contents actually stored within a program time frame are compared (step 2506), and if they agree, it is judged that all contents within a program time frame were successfully received and stored (step 2508). If they do not agree, it can be judged that the last contents was unsuccessfully received or stored.

For example, if the program storage success/failure evaluating part 112 received, as contents information, (in-program number = 1, the number of data events within program = 3), (in-program number = 2, the number of data events within program = 3), and (in-program number = 3, the number of data events within program = 3) in this order from the contents storing part 114, it can be judged that all contents within a program time frame were correctly received and stored. If (in-program number = 2, the number of data events within program = 3) was first received, since the in-program number was not 1 despite first reception, it can be judged in step 2504 that first contents were unsuccessfully received or stored. If (in-program number = 1, the number of data events within program = 3) and (in-program number = 3, the number of data events within program = 3) were received, it can be similarly judged in step 2504 that second contents were unsuccessfully received or stored. If (in-program number = 1, the number of data events within program = 3) and (in-program number = 2, the number of data events within program = 3) were received and program end time was reached, it can be judged in step 2506 that last contents were unsuccessfully received or stored.

Although, in the flowchart of FIG. 25, processing to receive and store a program itself is discontinued if at least one of contents was unsuccessfully received or stored, the failed contents may be remembered to continue reception and storage processing until program time end is reached. Even if plural contents were unsuccessfully received or stored, success or failure can be judged according to the flowchart of FIG. 25.

As has been described above, the transmitting apparatus 101 describes, as contents information, the order in which data events within a program time frame are transmitted and the number of data events transmitted within the same program transmitting duration, and transmits it along with contents, whereby the receiving apparatus 110 can determine whether each contents transmitted within a program transmitting duration were correctly received or stored.

### (Third embodiment)

A third embodiment is similar to the second embodiment in that the contents organization information storing part 103 does not manage data event IDs and the contents information adding part 108 adds a data event ID immediately before transmitting contents, but the former is different from the latter in that the rules for adding data event IDs exist. Flags for identifying the first data event and the last data event to be transmitted within a program time frame are added as contents information by the contents information adding part 108. Hereinafter, an embodiment in such a case will be described.

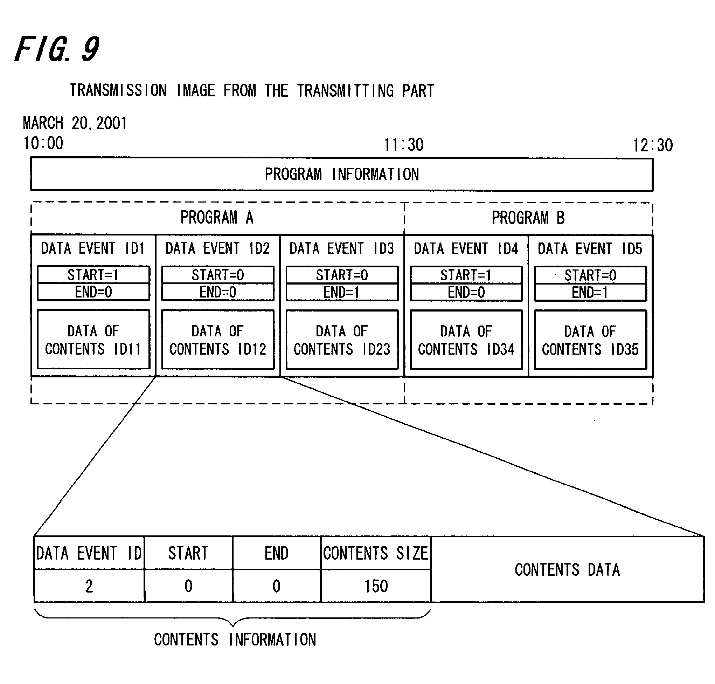

The configurations of a transmitting apparatus and a receiving apparatus are as shown in FIG. 17 like the second embodiment, and processing of the transmitting apparatus 101 is also performed according to a flow shown in FIG. 19. Differences are in that flags for identifying the first data event and the last data event to transmit within a program transmitting duration are added as contents information, and in that data event IDs are added according to a specific rule (data event IDs are added with consecutive values). Flags (start flag and end flag) for identifying the first data event and the last data event to be transmitted within a program transmitting duration can be added by referring to program contents-related information. A data event with the start flag set to 1 is first transmitted within a program transmitting duration, and a data event with the end flag set to 1 is last transmitted. Data events with the start flag and the end flag set to 1 exist respectively one within a program. For example, it is understood from program contents-related information as shown in FIG. 18 that, in the case where the sequence of a list of contents IDs within a program indicates a contents transmission order, contents whose contents ID is 11 are contents transmitted in the first data event within a program time frame with a program ID of A, and contents whose contents ID is 23 are contents transmitted in the last data event in the same program. Data event IDs are always incremented by one in the order of transmission. As a result, a transmission image from the transmitting part 109 is as shown in FIG. 9.

Upon receiving the transmission image as shown in FIG. 9, according to the same flow as the flowchart shown in FIG. 16, the contents storing part 114 stores contents information and contents received within a program time frame. As a result, the contents storing part 114 manages contents information and contents by storage contents management information as shown in FIG. 26, and the program storage success/failure evaluating part 112, at the end of program time frame, determines from the storage contents management information whether reception and storage succeeded. In other words, three points are checked: whether the start flag of contents first stored is 1, whether the end flag of contents last stored is 1, and whether the data event IDs of stored contents are in the order of values incremented by one. Since the storage contents management information as shown in FIG. 26 satisfies all the three points, it can be determined that reception and storage were correctly conducted for a target program. If at least one of the three points is not satisfied, it can be determined that reception and storage could not be correctly conducted for a target program (contents whose data event ID value was missing were not correctly received or stored).

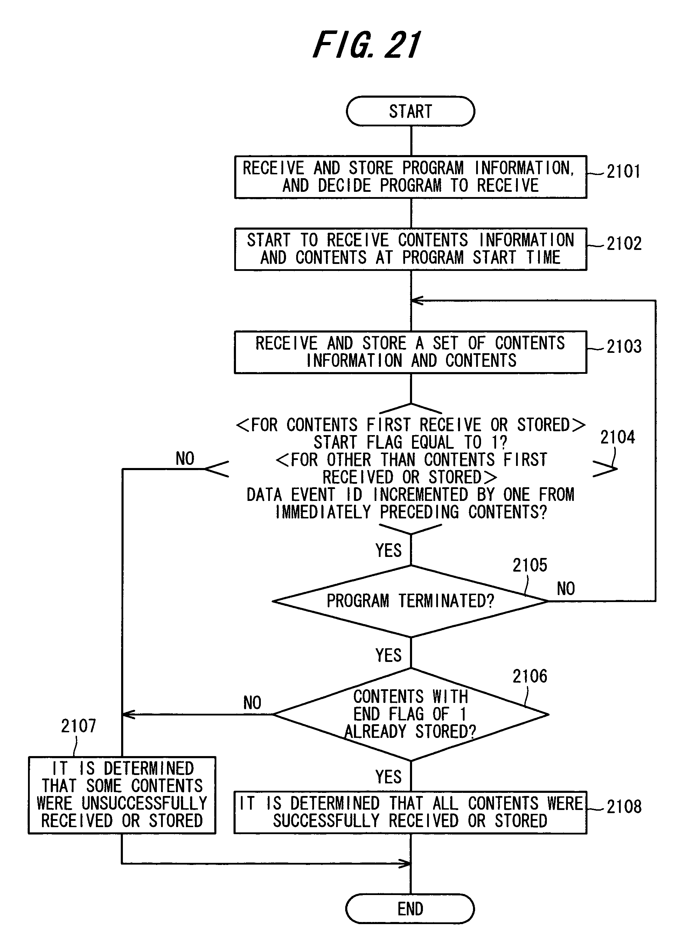

Instead of making success/failure evaluation at program termination, success/failure evaluation can be made in parallel with reception and storage processing. A processing flow of the receiving apparatus 110 in that case is as shown in FIG. 21. FIG. 21 is a flowchart for explaining data receive operation of the receiving apparatus in this embodiment. Processing in steps 2101 to 2103 is the same as the processing flow in the receiving apparatus 110 having been described so far. Each time the contents storing part 114 has stored contents information and contents received within a program time frame, it notifies the program storage success/failure evaluating part 112 of the fact. The program storage success/failure evaluating part 112, for contents first received and stored, checks whether the start flag in the contents information is 1, and for other than the contents first received and stored, checks whether the data event ID of received contents is incremented by one from contents received and stored immediately before (step 2104). If the result of the checking is NO, it can be judged that contents unsuccessfully received or stored exist (step 2107). This is repeated until program time frame ends (step 2105), at which time it is checked whether contents with the end flag set to 1 have already been stored (step 2106). If already stored, it can be determined that all contents within the program time frame have been correctly received and stored (step 2108). If not yet stored, it can be determined that the last contents were unsuccessfully received or stored (step 2107).

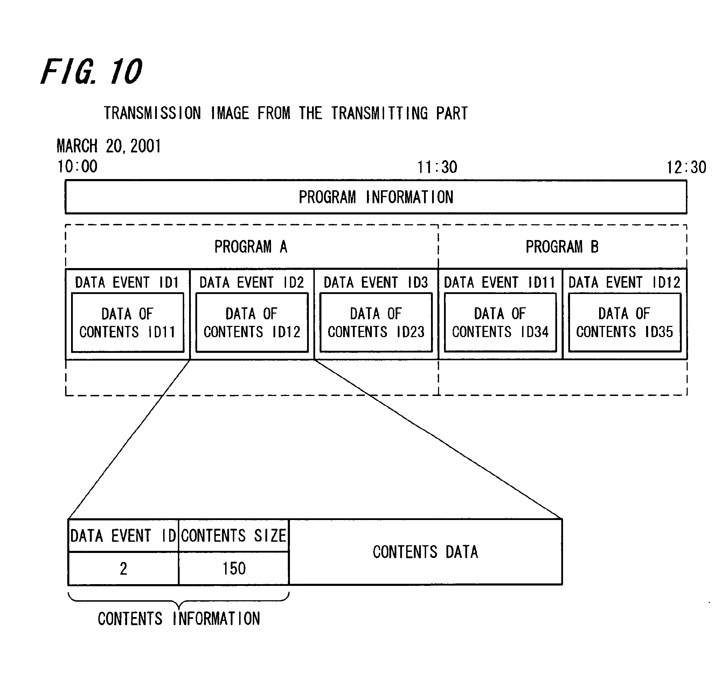

If data event IDs added according to the rule of adding consecutive values within an identical program are described as contents information, a transmission image from the transmitting part 109 is as shown in FIG. 10. For example, data events IDs are added as 1, 2, and 3 in program A, and as 11 and 12 in program B. In such a case, the receiving apparatus 110 cannot recognize failure in reception or storage of the first and last data events of a program but can recognize failure in reception or storage of intermediate data events.

As has been described above, the transmitting apparatus 110 describes, as contents information, flags for identifying a data event first transmitted and a data event last transmitted within a program transmitting duration, and data event IDs added according to the rule of adding consecutive values, and transmits it along with contents, whereby the receiving apparatus can determine whether each of contents transmitted within a program transmitting duration was correctly received or stored.

Although the present invention has been described based on preferred embodiments shown in the drawings, it is apparent that those skilled in the art can change or modify the present invention in various ways without departing from the spirit and scope of the present invention. The present invention includes such modifications also.

## Claims

1. A transmitting apparatus, comprising:
a program organization information storing part for storing program organization information including at least broadcast start time and duration for each program;
a contents organization information storing part for storing contents organization information including contents frames each composed of at least broadcast start time and duration for each contents; and
a program contents-related information creating part for creating program contents-related information including information about contents frames transmitted within a program transmitting duration for each program from said program organization information and said contents organization information;
wherein program contents-related information including information about contents frames transmitted within a program transmitting duration for each program is created from the program organization information and contents organization information.

2. The transmitting apparatus according to claim 1, comprising:
a program information creating part for creating program information including contents-related information about contents frames transmitted within a program transmitting duration for each program from program organization information stored by said program organization information storing part and the program contents-related information created by said program contents-related information creating part; and
a program information storing part for storing program information created by said program information creating part.

3. The transmitting apparatus according to claim 2,
wherein said contents-related information is a list of identifiers added to each of contents frames transmitted within a program.

4. The transmitting apparatus according to claim 2,
wherein said contents-related information is the number of contents frames transmitted within a program.

5. The transmitting apparatus according to claim 1, comprising:
a contents storing part for storing contents; and
a contents information adding part for adding contents information for each contents from program contents-related information created by said program contents-related information creating part;
wherein contents information is added for each contents from the program contents-related information.

6. The transmitting apparatus according to claim 5, wherein said contents information is an identifier added to a program transmitting contents frames within a program time frame.

7. The transmitting apparatus according to claim 5, wherein said contents information is sequence information of contents frames in a program transmitting contents frames within a time frame of said program.

8. The transmitting apparatus according to claim 7, wherein said sequence information of contents frames is information indicating that a contents frame is the first or last within a program time frame.

9. The transmitting apparatus according to claim 7, wherein said sequence information of contents frames is information added according to a predetermined rule based on transmission sequences of contents within a program.

10. The transmitting apparatus according to claim 1, comprising a transmitting part that transmits program contents-related information created by said program contents-related information creating part, or program information stored by said program information storing part, or contents added with contents information by said contents information adding part.

11. A receiving apparatus, comprising:
a program information storing part for holding program information;
a contents storing part for storing contents according to program time frame included in the program information; and
a program storage success/failure evaluating part for judging success or failure by matching contents-related information included in the program information with contents information stored within a program time frame by the contents storing part.

12. The receiving apparatus according to claim 11,
wherein said program storage success/failure evaluating part determines success or failure by matching the number of contents frames included in the contents-related information included in the program information with the number of contents stored by the contents storing part.

13. The receiving apparatus according to claim 11,
wherein said program storage success/failure evaluating part determines success or failure by matching a list of contents frame identifiers included in the contents-related information included in the program information with a list of contents frame identifiers in contents information stored by the contents storing part.

14. A receiving apparatus, comprising:
a program information storing part for holding program information;
a contents storing part for storing contents added with contents information according to program time frame included in the program information; and
a program storage success/failure evaluating part for determining success or failure by matching contents information added for each contents with the program information.

15. The receiving apparatus according to claim 14,
wherein said program storage success/failure evaluating part determines success or failure by matching a program identifier included in the contents information stored by said contents storing part with a program identifier included in the program information held by the program information storing part.

16. A receiving apparatus, comprising:
a contents storing part for storing contents according to program time frame included in program information; and
a program storage success/failure evaluating part for determining success or failure by matching contents frame sequence information described as contents information stored by said contents storing part with the order in which contents were actually stored by the contents storing part.

17. The receiving apparatus according to claim 16,
wherein, when said contents frame sequence information is information indicating that a contents frame is the first or last within a program time frame, said program storage success/failure evaluating part confirms that contents transmitted in a time frame of a contents frame added with information indicating that said contents frame is the first or last within a program time frame have been received or stored at the first or last within the program time frame.

18. The receiving apparatus according to claim 16,
wherein, when said contents frame sequence information is information added according to a predetermined rule based on transmission sequences of contents frames within a program time frame, said program storage success/failure evaluating part confirms that contents frames have been received or contents transmitted in the time frame of the contents frames have been stored, according to the predetermined rule based on transmission sequences of contents frames within the program time frame.

19. A storage data broadcast system transmitting and receiving data over a transmission line, wherein a transmitting apparatus of said storage data broadcast system includes a program information creating part for creating program information added with contents-related information usable for checking contents, and a receiving apparatus of said storage data broadcast system includes a program storage success/failure evaluating part for checking received contents, using contents information added to the contents by said program information creating part of said transmitting apparatus.

20. The storage data broadcast system transmitting and receiving data over a transmission line, according to claim 19,
wherein the contents-related information includes contents list data indicating a list of contents within a program.

21. The storage data broadcast system transmitting and receiving data over a transmission line, according to claim 19,
wherein the contents-related information includes contents count data indicating the number of contents within a program.

22. A storage data broadcast system transmitting and receiving data over a transmission line, wherein a transmitting apparatus of said storage data broadcast system adds start data and end data indicating the start and end to first and last contents in a program, respectively, and a receiving apparatus of said storage data broadcast system includes a program storage success/failure evaluating part for determining whether first or last contents have been correctly received or stored using said start data and said end data at the time of program reception or storage.

23. A storage data broadcast system transmitting and receiving data over a transmission line, wherein a transmitting apparatus of said storage data broadcast system adds data indicating a transmission sequence within the program, respectively, to contents in a program, and the receiving apparatus of said storage data broadcast system includes a program storage success/failure evaluating part for determining whether contents have been correctly received or stored using the data indicating a transmission sequence at the time of program reception or storage.

24. A storage data broadcast system transmitting and receiving data over a transmission line, wherein a transmitting apparatus of said storage data broadcast system includes a program information creating part for creating program information added with contents-related information usable for checking contents.

25. A storage data broadcast system transmitting and receiving data over a transmission line, wherein a receiving apparatus of said storage data broadcast system includes a program storage success/failure evaluating part for checking received contents, using contents-related information usable for checking contents.

26. A storage data broadcast method of transmitting and receiving data over a transmission line, wherein a transmitting apparatus of said storage data broadcast method creates program information added with contents-related information usable for checking contents.

27. A recording medium recording a storage data broadcast program for transmitting and receiving data over a transmission line, wherein a transmitting apparatus transmitting data to a receiving apparatus for receiving data creates program information added with contents-related information usable for checking contents.

28. A storage data broadcast program transmitting and receiving data over a transmission line, wherein a transmitting apparatus transmitting data to a receiving apparatus for receiving data instructs a computer to execute a step of creating program information added with contents-related information usable for checking contents.

29. The transmitting apparatus according to claim 2, comprising a transmitting part that transmits program contents-related information created by said program contents-related information creating part, or program information stored by said program information storing part, or contents added with contents information by said contents information adding part.

30. The transmitting apparatus according to claim 5, comprising a transmitting part that transmits program contents-related information created by said program contents-related information creating part, or program information stored by said program information storing part, or contents added with contents information by said contents information adding part.
